(19) Europäisches Patentamt
European Patent Office
Office européen des brevets

(11) **EP 2 784 549 A2**

(12) **EUROPEAN PATENT APPLICATION**

(43) Date of publication:
01.10.2014 Bulletin 2014/40

(51) Int Cl.:
*G01V 1/02* (2006.01)

(21) Application number: 14161213.5

(22) Date of filing: 24.03.2014

(84) Designated Contracting States:
AL AT BE BG CH CY CZ DE DK EE ES FI FR GB GR HR HU IE IS IT LI LT LU LV MC MK MT NL NO PL PT RO RS SE SI SK SM TR
Designated Extension States:
BA ME

(30) Priority: 26.03.2013 US 201361805266 P

(71) Applicant: CGG Services SA
91300 Massy (FR)

(72) Inventors:
• Svay, Julie
91300 Massy
(FR)
• Bousquie, Nicolas
91300 Massy (FR)
• Niang, Cheikh
91300 Massy (FR)
• Mensch, Thomas
91300 Massy (FR)

(74) Representative: Regimbeau
20, rue de Chazelles
75847 Paris Cedex 17 (FR)

(54) **Seismic Systems and Methods Employing Repeatability Shot Indicators**

(57) Methods and systems for generating multi-criteria shot indicators are described. The multi-criteria shot indicator values can be weighted and the weighting factors can themselves incorporate one or more sensitivity factors. In another aspect, the shot indicators are related to the 4D repeatability and/or the 3D stability of seismic features associated with individual shots or sets of shots. The multi-criteria shot indicators can be evaluated in real-time onboard a seismic vessel and included as part of an infill reshoot decision making/ quality control process.

Figure 3

302
Generating a plurality of shot indicator values

304
Multiplying each of said plurality of shot indicator values by a weighting factor assigned to each of said plurality of shot indicator values to generate a plurality of weighted shot indicator values

306
Summing each of said weighted shot indicator values to generate said multi-criteria shot indicator value

EP 2 784 549 A2

**Description**

**RELATED APPLICATION**

The present application is related to, and claims priority from U.S. Provisional Patent Application No. 61/805,266, filed March 26, 2013, entitled "4D-REPEATABILITY SHOT INDICATORS," to Julie SVAY, Nicolas BOUSQUIE, Cheikh NIANG and Thomas MENSCH, the disclosure of which is incorporated herein by reference.

**TECHNICAL FIELD**

Embodiments of the subject matter disclosed herein generally relate to methods and systems for seismic data processing and, more particularly, to mechanisms and techniques for improving 4D repeatability and/or 3D stability of seismic features related to individual shots or a set of shots.

**BACKGROUND**

Marine-based seismic data acquisition and processing techniques are used to generate a profile (image) of a geophysical structure (subsurface) of the strata underlying the seafloor. This profile does not necessarily provide an accurate location for oil and gas reservoirs, but it may suggest, to those trained in the field, the presence or absence of oil and/or gas reservoirs. Thus, providing an improved image of the subsurface in a shorter period of time is an ongoing process.

The acquisition of data in marine-based seismic methods usually produces different results in source strength and signature based on differences in acquisition configuration and sub-surface conditions. Further data processing and interpretation of seismic data can be improved when the data collection methods produce results with the greatest degree of repeatability. For example, determining during an acquisition survey that a problem has developed that will degrade the results of the acquisition survey by generating imaging with a low degree of repeatability is important to producing the highest quality seismic imaging.

Recently, so-called 4D or time-lapse surveys have become an important addition to the product offerings of seismic survey companies. In 4D surveys, a first survey (or one vintage) taken at a first time operates as a baseline to indicate the potential presence/absence of hydrocarbon deposits in a given area. A second survey (or another vintage), taken later, operates to indicate the potential presence/absence of hydrocarbon deposits in the same geographical area, e.g., after removal of the hydrocarbons has occurred. By comparing the two surveys, a 4D picture (where time is the fourth dimension) can be developed which can be used for a number of purposes, e.g., to determine the continued viability of a hydrocarbon field or where to drill for example. However, in order for a 4D survey to be accurate, the first and second surveys need to be performed in a very similar manner, e.g., shot position, receiver position, and other important parameters for a seismic survey. This gives rise to a need to make surveys highly repeatable and to determine when subsequent surveys are not accurate repetitions of an earlier baseline survey.

Attempts have been made to detect, and correct for, seismic acquisitions having unacceptable repeatability characteristics using illumination maps. However, these attempts have been unable to associate the shot position with the unacceptable repeatability characteristics, thus preventing the system from being able to reshoot only those locations where repeatability issues have occurred.

The seismic data acquired by the receivers (sensors on towed streamers or nodes) should be released from the source wave field variability in order to correctly restore quantitative features related to the subsurface properties. Hence, during the seismic acquisition it is important to control the stability of the source signal to ensure the quality of seismic recordings. The source signature stability is therefore important for both 3D and 4D surveys, to ensure that there are no artificial variations that could be interpreted as variations in the subsurface geology or reservoir state.

Accordingly, it would be desirable to provide systems and methods to monitor such information and avoid the afore-described problems and drawbacks by providing the ability to quickly determine if shot are within acceptable repeatability and stability limits.

**SUMMARY**

These, and other, aspects associated with seismic survey quality control are attained by embodiments described herein which include the generation of a multi-criteria shot indicator which indicates the repeatability and/or stability of one or more shots in a seismic survey. The multi-criteria shot indicator be formed using two or more mono-indicators, e.g., each of which is associated with a different shot quality parameter.

According to an embodiment, a method for generating a multi-criteria shot indicator associated with repeatability of a seismic acquisition includes the steps of generating a plurality of shot indicators wherein the plurality of shot indicators are associated with determining a repeatability of one or more shots, generating a plurality of weighting values associated, respectively, with the plurality of shot indicators, applying the plurality of weighting values to the plurality of shot indicators and generating a plurality of weighted shot indicators; and summing the plurality of weighted shot indicators to generate the multi-criteria shot indicator.

According to another embodiment, a method for generating a multi-criteria shot indicator associated with repeatability or stability of seismic surveying, includes generating a plurality of shot indicators, wherein the plurality of shot indicators are associated, respectively, with determining repeatability or stability of one or more shots and comprise at least two of: a surface geometry indicator, a target illumination indicator, a travel time at target indicator, a source signature indicator and a noise indicator; and combining the plurality of shot indicators to generate the multi-criteria shot indicator.

According to another embodiment, a system for generating a multi-criteria shot indicator based on seismic data includes one or more processors configured to execute computer instructions and a memory configured to store the computer instructions wherein the computer instructions further comprise a shot indicator component for generating a plurality of shot indicators, wherein the plurality of shot indicators comprise at least two of: a surface geometry indicator, a target illumination indicator, a travel time at target indicator, a source signature indicator and a noise indicator; and a summing component for summing the plurality of shot indicators to generate a multi-criteria shot indicator.

## BRIEF DESCRIPTION OF THE DRAWINGS

The accompanying drawings, which are incorporated in and constitute a part of the specification, illustrate one or more embodiments and, together with the description, explain these embodiments. In the drawings:

Figure 1 shows various aspects of an exemplary marine seismic survey system in which various repeatability shot indicators can be implemented;
Figures 2 and 3 are flowcharts depicting methods of integrated multi-criteria shot indicator generation according to embodiments;
Figures 4 shows various aspects of software components or modules which can be used to implement the embodiments; and
Figure 5 illustrates an exemplary data processing device or system which can be used to implement the embodiments.

## DETAILED DESCRIPTION

The following description of the embodiments refers to the accompanying drawings. The same reference numbers in different drawings identify the same or similar elements. The following detailed description does not limit the invention. Instead, the scope of the invention is defined by the appended claims. Some of the following embodiments are discussed, for simplicity, with regard to the terminology and structure of generating maps of seismic illumination during marine acquisition. However, the embodiments to be discussed next are not limited to these configurations, but may be extended to other arrangements as discussed later.

Reference throughout the specification to "one embodiment" or "an embodiment" means that a particular feature, structure or characteristic described in connection with an embodiment is included in at least one embodiment of the subject matter disclosed. Thus, the appearance of the phrases "in one embodiment" or "in an embodiment" in various places throughout the specification is not necessarily referring to the same embodiment. Further, the particular features, structures or characteristics may be combined in any suitable manner in one or more embodiments.

According to various embodiments described herein, methods and systems for generating multi-criteria shot indicators are presented which, for example, take into account information associated with the true (i.e., accurate) source and receiver locations, and the complexity of the subsurface. For example, a multi-criteria shot indicator according to embodiments can be a composite of a number of individual shot indicators, e.g., two or more of: a surface geometry indicator, a target illumination indicator, a travel time at target indicator, a source signature indicator and a noise indicator. Individual shot indicators can be weighted prior to their combination to generate a multi-criteria shot indicator. Such methods and systems can, for example, be used in the quality control of the data acquisition and help guide those performing seismic surveys to makes infill decisions during the surveys.

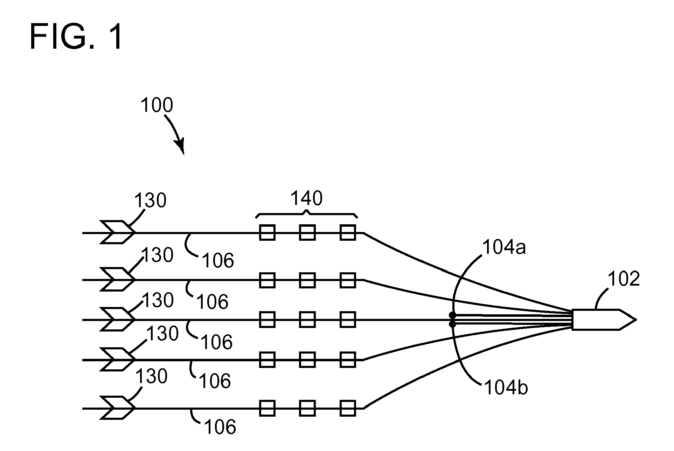

In order to provide some context for the subsequent exemplary embodiments related to multi-criteria shot indicators and quality control using such shot indicators, consider first an example of a marine seismic data acquisition process and system as will now be described with respect to Figure 1. In Figure 1, a data acquisition system 100 includes a ship 102 towing a plurality of streamers 106 that can extend one or more kilometers behind the ship 102. Each of the streamers 106 can include one or more birds 130 that maintain the streamer 106 in a known fixed position relative to other streamers 106, and the one or more birds 130 are capable of moving the streamers 106 as desired according to bi-directional communications received by the birds 130 from the ship 102. The streamers 106 also each carry a plurality of receivers 140, e.g., geophones and/or hydrophones.

One or more source arrays 104a,b can also be towed by ship 102, or another ship, for generating seismic waves. Source arrays 104a,b can be placed either in front of or behind the receivers 140, or both behind and in front of the receivers 140. The seismic waves generated by the source arrays 104a,b propagate downward, reflect off of, and penetrate the seafloor, wherein the refracted waves eventually are reflected by one or more reflecting structures (not shown in Figure 1) back to the surface. The reflected seismic waves then propagate upward and are detected by the receivers 140 disposed on the streamers 106. The seismic waves then reflect off of the surface of the body of water traveling downward and are once again detected by the receivers 140 disposed on streamers 106 as receiver ghosts. This process is generally referred to as "shooting" a particular geographical area of interest (GAI), with the GAI sometimes also being referred to as a "cell".

The signals recorded by seismic receivers 140 vary in time, having energy peaks that may correspond to reflectors between layers in the subsurface being imaged by the seismic acquisition. In reality, since the sea floor and the air/water are highly reflective, some of the peaks correspond to multiple reflections or spurious reflections that should be eliminated before the geophysical structure can be correctly imaged. As will be appreciated by those skilled in the art, a large number of different data processing techniques can be applied to the raw seismic data to make the image of the subsurface more accurate by removing or reducing the impact of noise and other data that negatively impacts its accuracy. A source array includes a plurality of individual wave sources. An individual wave source may be an air gun, a cluster of air guns or a marine vibrator. Since the dimensions of the source array, including the plurality of individual sources, are comparable with the wavelengths of a generated wave, the wave generated by the source array is directional, i.e., the shape of the wave, or the signature varies with the direction until, at a great enough distance, the wave starts having a stable shape. After the shape becomes stable, the amplitude of the wave decreases inversely proportional to the distance from the source. The region where the signature shape no longer changes significantly with distance is known as the "far-field," in contrast to the "near-field" region where the shape varies based on the distance from the source. Knowledge of the wave source's far-field signature is desirable in order to extract information about the geological structure generating the detected wave upon receiving the far-field input wave.

In order to estimate the source array's far-field signature, an equivalent notional signature for each individual source may be calculated for each of the guns using near-field measurements (see e.g., U.S. Patent No. 4,476,553 the disclosure of which is incorporated herein by reference). The equivalent notional signature is a representation of the amplitude of the wave due to an individual wave source as a function of time, the source array's far-field signature being a superposition of the notional signatures corresponding to each of the individual sources. In other words, the equivalent notional signature is a tool for representing the contribution of an individual source to the far-field signature, such that the individual source contribution is decoupled from contributions of other individual wave sources in the source array.

Among other things, the point of the discussion above of Figure 1 is to illustrate that marine seismic surveying for hydrocarbon deposits beneath the seafloor is a highly complex procedure, making repeatability for subsequent-in-time 4D surveys that much more important to achieve accurate results. This can be accomplished by, for example, generating a multi-criteria shot indicator that takes into account a number of factors which accurately indicate the repeatability of the shot being evaluated (or a set of shots). In the following, a "shot" refers to a system comprising one source position and all associated receiver positions along the cables (i.e., the receivers' instantaneous positions when the source is fired).

Thus, according to an embodiment, an integrated, normalized 4D-indicator "I" is defined for each shot, or set of shots, as a weighted sum of various indicators qualifying the repeatability/stability of the shot with the equation:

$$I = \sum_{j=0}^{C} W_j\, I_j \qquad\qquad (1)$$

where $C$ is the number of repeatability or stability criteria being used in a particular embodiment and $W_j$ is a weight associated with corresponding indicator $I_j$. Note, however, that according to some embodiments, the summed indicators $I_0 + I_{1\ldots}$ need not be weighted at all, i.e., each $W_j$ may be equal to 1. As expressed by equation (1) there can, of course be any number of shot indicators which are summed to generate the multi-criteria shot indicator I. There can be any combination of two or more shot indicators selected from a pool of indicators. According to one purely illustrative embodiment, which is described in more detail below, the pool can include five indicators, e.g., indicator $I_1$ can be based on surface geometry, indicator $I_2$ can be based on illumination, indicator $I_3$ can be based on travel time, indicator $I_4$ can be based on source signature and indicator $I_5$ can be based on noise.

Examples of mono-criterion indicators, $I_j$, and weights, $W_j$, are presented hereafter for individual shots (or sets of shots) paired between, for example, base and monitor surveys. As will be appreciated by those skilled in the art, 4D seismic surveying refers to the technique of taking one seismic survey of a particular geographical area at a first time (i.e., the baseline survey) and another seismic survey of the same geographical area at a later time (i.e., the monitor survey). The baseline survey and the monitor survey can then be compared for various purposes, e.g., to observe changes in the hydrocarbon deposits in a geographical area which has an active well operating therein. Looking first to indicator $I_1$, this surface geometry indicator is related to the 4D geometrical mismatches in source positions, $\Delta s$, and receiver positions $\Delta r_j$, where k = 1 to n (n being the number of receivers within the set of cables or streamers), between base and monitor shots. Various mechanisms for calculating positioning or source mismatch are known to those skilled in the art and, therefore, are not described in further detail herein. The surface geometry indicator also can be evaluated with various metrics calculated using $\Delta s$ and $\Delta r_i$.

One of the most classical methods which can be used as a surface geometry indicator according to an embodiment is the computation of the so-called "minimal $\Delta S+\Delta R$ distance". In this method, the distance between base and monitor source positions $\Delta S$ and the distance between base and monitor receiver positions $\Delta R$ are computed and summed for each trace. The pair of base trace and monitor trace for which the summed distance $\Delta S+\Delta R$ is minimal is selected and defines the "minimal $\Delta S+\Delta R$ distance" metric which can be used as the surface geometry indicator.

Alternatively, or in combination therewith, other metrics could be computed and used, e.g., metrics which account for trace offsets and azimuths.

The target illumination indicator $I_2$ is, according to an embodiment, related to mismatches in target illumination between base shots and monitor shots. The target illumination indicator $I_2$ can be evaluated, for example, by determining a similarity metric between shot imprints from the baseline and monitor surveys. In this context, a shot imprint can be defined as the target illumination associated with a single acquisition shot. As will be appreciated by those skilled in the art, target illumination refers to the number of source-receiver pairs for which reflections occur at a given point. Thus, a shot imprint shows the summation of illuminations obtained from one source and all of the receivers in the towed streamer array(s). One way to generate the indicator $I_2$ according to an embodiment is to process the shot imprint as images represented by pixels with different intensities, i.e., associated with reflection point locations and either hit count or illumination amplitude. These representations, i.e., current imprints and reference imprints, are then compared using an image registration metric. For more details regarding this type of illumination indicator $I_2$, the interested reader is directed to U.S. Patent Application Serial No. 14/102,592, entitled "A Repeatability Indicator Based on Shot Illumination for Seismic Acquisition, filed on December 11, 2013, the disclosure of which is hereby incorporated by reference in its entirety.

Continuing with indicator $I_3$, the travel time indicator is related to the 4D mismatches between travel times recorded for a baseline survey and corresponding travel times for each hit on target in a monitor survey. For example, the travel time indicator $I_3$ can be evaluated from reflection travel times computed on the target for some, or all, of the source-receiver couples in both the baseline and monitor surveys

Next, with respect to indicator $I_4$, the source signature indicator is related to the variability of the source signature with respect to a reference signature. The reference signature can defined either for the current survey for a 3D shot-to-shot stability analysis, or from a base shot signature for a 4D evaluation. The source signature can then be evaluated based on near-field or far-field signatures from various metrics, e.g., NRMS, peak-to-bubble ratio, directivity, etc., as will be appreciated by those skilled in the art.

Continuing next with indicator $I_5$, the seismic noise indicator is related to the seismic noise, e.g., the seismic signal to noise ratio, recorded on the shot or, more characteristically, on the shot-line. Those skilled in the art will appreciate that numerous methods to assess the signal to noise ratio on a seismic shot gather in the frequency bandwidth of interest are known and can be used to calculate indicator $I_5$. In one embodiment, for example, the noise is measured on a time window applied to the seismic traces of the shot gathers, generally before the first arrival of the seismic signals on the top of the seismic gather or at the bottom of the gather where little energy comes from late reflections. The time window for the signal is generally centered around the first arrival signal. Frequency amplitude spectra are then computed on several traces, for both signal and noise time windows, and the signal to noise ratio is computed either for each frequency component or for a given frequency bandwidth. As mentioned earlier, one or more of the summed indicators may (or may not) be weighted to generate the multi-criteria shot indicator according to various embodiments. The weights can be adjusted to allocate more or less importance to each of the repeatability indicators in the summed multi-criteria shot indicator.

For example, and according to one embodiment, additive sensitivity factors $W_j$ can be incorporated based on the equation:

$$W_j = f_0 \times f_1 \times w_i \tag{2}$$

where $f_0$ defines a sensitivity factor for shot illumination and $f_1$ defines a full fold illumination at the imprint location.

Sensitivity factor $f_0$ can be set to a high value if the shot illumination imprint is located on the reservoir area of interest for 4D analysis and can be set low if the shot illumination imprint is not located on the reservoir area of interest. Based on complementary full acquisition illumination analysis, it is possible to characterize the embodiment full-fold illumination at the imprint location. Accordingly, the multi-criteria shot indicator system can set $f_1$ low in the case of strong data redundancy and high in the case of critical coverage.

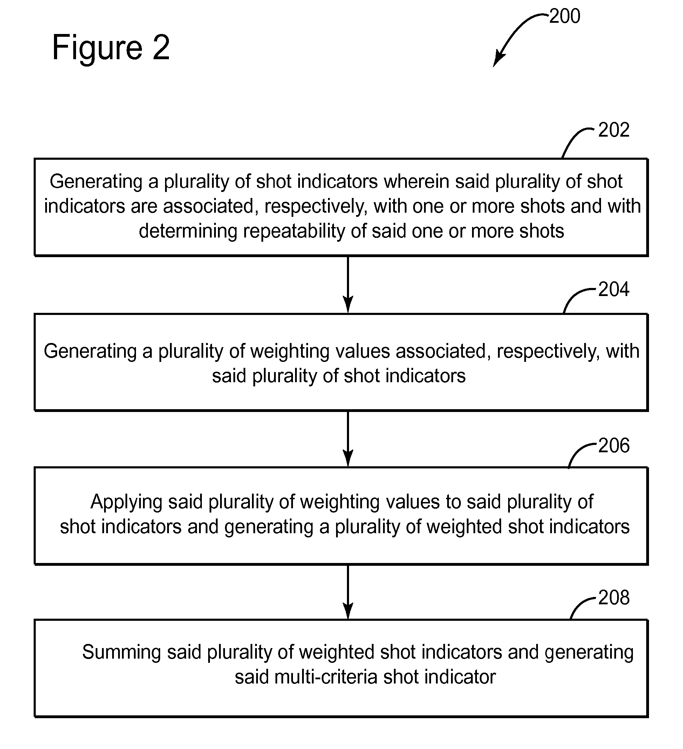

Based on the foregoing embodiments which describe how to calculate multi-criteria shot indicators, generalized methods for their generation can now be described. Looking now to Figure 2, a method 200 for generating a multi-criteria shot indicator is depicted. Starting at step 202, a plurality of shot indicators are generated, wherein the plurality of shot indicators are associated respectively, with one or more shots. As described above, each of the plurality of shot indicators which are generated provide information relevant to the repeatability of the associated one or more shots.

Next, at step 204, a plurality of weighting values is generated wherein the weighting values are associated, respectively, with the plurality of shot indicators. Continuing at step 206 of the method embodiment, the plurality of weighting values is applied to the plurality of shot indicators to generate a plurality of weighted shot indicators. An example of a technique for applying a weighting value to a shot indicator is multiplying the shot indicator by the weighting value. It will be appreciated by those skilled in the art that the embodiment of Figure 2 is not intended to imply that each of the shot indicators must have its own associated weighting value. Indicators which are not weighted can, for example, be represented in equation (2) above by assigning a value of "1" to the respective weighting value $W_i$ for shot indicators that are unweighted, if any.

Next at step 208, the plurality of weighted shot indicators is summed to generate a multi-criteria shot indicator. It should be noted in the exemplary method embodiment of Figure 2 that different groups of weighted shot indicators can be summed to generate different multi-criteria shot indicators.

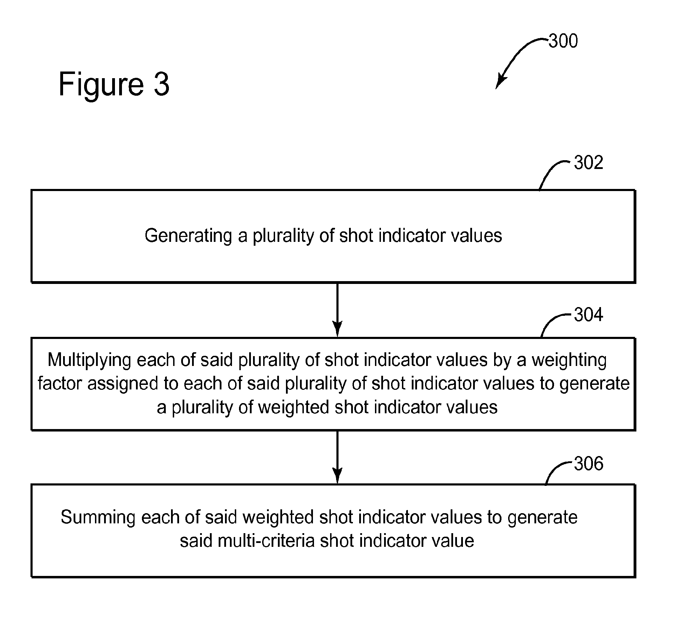

Looking now to Figure 3, another method embodiment 300 for generating a multi-criteria shot indicator is depicted. Starting at step 302 of the, a plurality of shot indicator values is generated. It should be noted in the method 300 that the shot indicators provide information for determining the repeatability and/or stability of the associated one or more shots.

Next, at step 304, each of the plurality of shot indicators is multiplied by an assigned weighting factor to generate a plurality of weighted shot indicator values. Note that, in this embodiment, the usage of weighting is optional and that step 304 can be omitted. Continuing at step 306, the plurality of weighted shot indicators is summed to generate a multi-criteria shot indicator value. It should be noted that different groups of weighted shot indicators can be summed to generate different multi-criteria shot indicators. Moreover, although not shown in Figure 3, an additional step of outputting the multi-criteria shot value and/or storing the multi-criteria shot value in memory can be provided so that a marine seismic acquisition operator can use the indicator to determine, e.g., whether the shot or group of shots associated with the multi-criteria indicator should be repeated in order to improve the repeatability or stability of those shot(s).

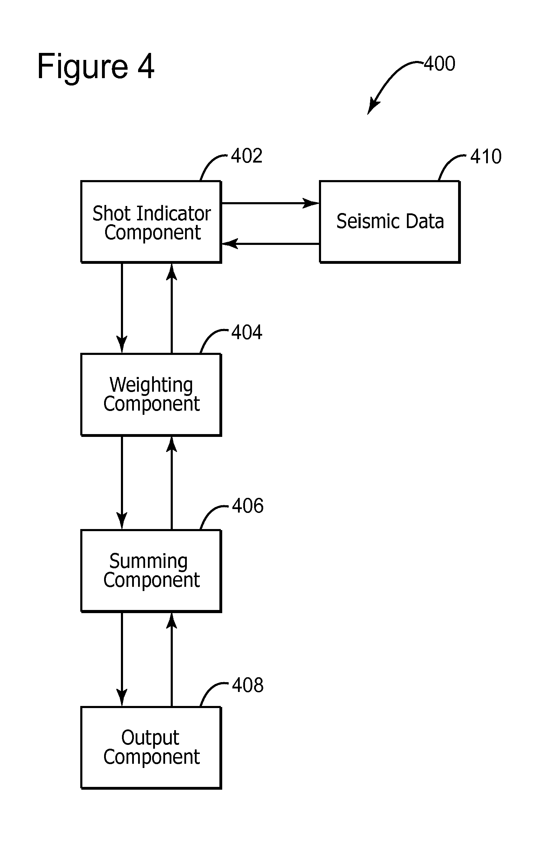

As will be appreciated from the foregoing discussion, methods for generating multi-criteria shot indicators according to these embodiments may, at least in part, be implemented in software operating on a suitably programmed computing device. A system, with suitable software modules or components, will now be described with respect to Figure 4. Looking now to Figure 4, a multi-criteria shot indicator generating system 400 comprises a shot indicator component 402, a weighting component 404, a summing component 406, an output component 408 and seismic data 410. The shot indicator component 402 provides the capability to generate a plurality of shot indicators based on the seismic data 410 as described above. It should further be noted the seismic data 410 can be provided from either offline or online sources.

The weighting component 404 provides the capability to generate a plurality of weighting values. As described earlier, the weighting values are associated with the plurality of shot indicators. The summing component 406 provides the capability to apply the weighting values to the shot indicators and to sum the weighted shot indicators to generate a multi-criteria shot indicator. Continuing with the embodiment 400, the output component 408 provides the capability to deliver multi-criteria shot indicators for further processing. It should be noted in the embodiment node 400 that the multi-criteria shot indicators can be delivered locally, i.e., onboard the seismic vessel or to a remote location, i.e., land based, for analysis and decision making.

Another purpose for the weights $W_i$ is to normalize each of the repeatability indicators $I_i$ in the integrated multi-criteria shot indicator in order to make each mono indicator dimensionless to enable the system or algorithm to sum the various dimensionless mono indicators together. This, in turn, enables embodiments to assess the repeatability of a monitor line versus a corresponding base line and to determine whether to accept, as valid, a given monitor line: Stated differently, the weighted, summed multi-criteria shot indicator can be considered to be a cost function. As will be appreciated by those skilled in the art, in mathematical optimization and decision theory, a cost function (or equivalently a loss function) is a function that maps an event, or values of one or more variables, onto a real number which represents a "cost" associated with the event. Optimization approaches then seek generally to minimize the cost function. The multi-criteria shot indicator analysis and decision making process described in the foregoing embodiments can thus be translated into an optimization problem of the cost function (e.g., a minimization of the cost function). Thus, the normalized 4D-indicator "I" described above is not limited to being a weighted sum of various indicators qualifying the repeatability/stability of the shot as shown in equation (1). Instead, it can be also a weighted product or any type of combination of the individual indicators. The form of the cost function generally depends on the method chosen to solve the optimization problem.

Decision making methods per se are known to those skilled in the art and, therefore, are not described in further detail herein. For example, however, in another embodiment, a fuzzy logic approach could be used to the decision making problem so that the individual mono indicators are mixed together in a different way than described above. In such a fuzzy logic embodiment, the mono indicators are mapped into fuzzy variables in order to define ranges of the quality of the 4D repeatability. All of the fuzzy variables corresponding to each mono indicator (e.g., far field source variability, illumination imprint matching, specular travel time misfit, signal to noise, etc.) are then contributing together to a global decision on the quality of the repeatability of the line, which is reached after a de-fuzzification process is performed.

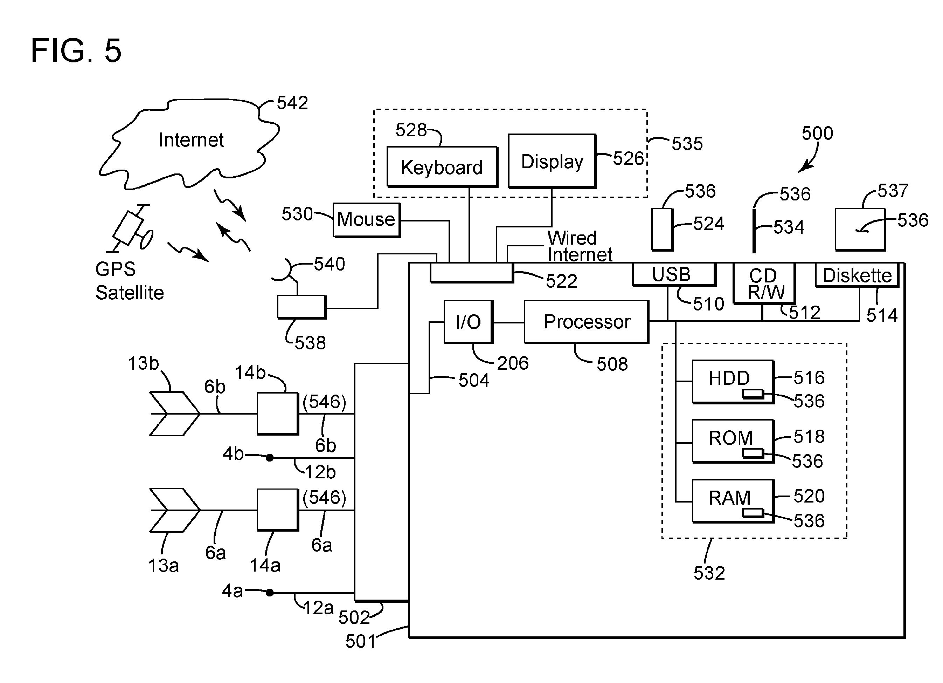

The computing device(s) or other network nodes involved in the integrated multi-criteria shot indicator generation, as set forth in the above described embodiments can be any type of computing device capable of processing and communicating seismic data associated with a seismic survey. An example of a representative computing system capable of carrying out operations in accordance with these embodiments is illustrated in Figure 5. System 500 includes, among other items, server 501, source/receiver interface 502, internal data/communications bus (bus) 504, processor(s) 508 (those of ordinary skill in the art can appreciate that in modern server systems, parallel processing is becoming increasingly prevalent, and whereas a single processor would have been used in the past to implement many or at least several functions, it is more common currently to have a single dedicated processor for certain functions (e.g., digital signal processors) and therefore could be several processors, acting in serial and/or parallel, as required by the specific application), universal serial bus (USB) port 510, compact disk (CD)/digital video disk (DVD) read/write (R/W) drive 512, floppy diskette drive 514 (though less used currently, many servers still include this device), and data storage unit 532.

Data storage unit 532 itself can comprise hard disk drive (HDD) 516 (these can include conventional magnetic storage media, but, as is becoming increasingly more prevalent, can include flash drive-type mass storage devices 524, among other types), ROM device(s) 518 (these can include electrically erasable (EE) programmable ROM (EEPROM) devices, ultra-violet erasable PROM devices (UVPROMs), among other types), and random access memory (RAM) devices 520. Usable with USB port 510 is flash drive device 524, and usable with CD/DVD R/W device 512 are CD/DVD disks 534 (which can be both read and write-able). Usable with diskette drive device 514 are floppy diskettes 537. Each of the memory storage devices, or the memory storage media (516, 518, 520, 524, 534, and 537, among other types), can contain parts or components, or in its entirety, executable software programming code (software) 536 that can implement part or all of the portions of the method described herein. Further, processor 508 itself can contain one or different types of memory storage devices (most probably, but not in a limiting manner, RAM memory storage media 520) that can store all or some of the components of software 536.

In addition to the above described components, system 500 also comprises user console 534, which can include keyboard 528, display 526, and mouse 530. All of these components are known to those of ordinary skill in the art, and this description includes all known and future variants of these types of devices. Display 526 can be any type of known display or presentation screen, such as liquid crystal displays (LCDs), light emitting diode displays (LEDs), plasma displays, cathode ray tubes (CRTs), among others. User console 535 can include one or more user interface mechanisms such as a mouse, keyboard, microphone, touch pad, touch screen, voice-recognition system, among other inter-active inter-communicative devices.

User console 534, and its components if separately provided, interface with server 501 via server input/output (I/O) interface 522, which can be an RS232, Ethernet, USB or other type of communications port, or can include all or some of these, and further includes any other type of communications means, presently known or further developed. System 500 can further include communications satellite/global positioning system (GPS) transceiver device 538, to which is electrically connected at least one antenna 540 (according to an exemplary embodiment, there would be at least one GPS receive-only antenna, and at least one separate satellite bi-directional communications antenna). System 500 can access internet 542, either through a hard wired connection, via I/O interface 522 directly, or wirelessly via antenna 540, and transceiver 538.

Server 501 can be coupled to other computing devices, such as those that operate or control the equipment of ship 102, via one or more networks. Server 501 may be part of a larger network configuration as in a global area network (GAN) (e.g., internet 542), which ultimately allows connection to various landlines.

According to a further exemplary embodiment, system 500, being designed for use in seismic exploration, will interface with one or more sources 104a,b and one or more receivers 140. These, as previously described, are attached to streamers 106, to which are also attached birds 130 that are useful to maintain positioning. As further previously discussed, sources 104 and receivers 140 can communicate with server 501 either through an electrical cable that is part of streamer 106, or via a wireless system that can communicate via antenna 540 and transceiver 538 (collectively described as communications conduit 546).

According to further exemplary embodiments, user console 535 provides a means for personnel to enter commands and configuration into system 500 (e.g., via a keyboard, buttons, switches, touch screen and/or joy stick). Display device 526 can be used to show: streamer 1066 position; visual representations of acquired data; source 104 and receiver 140 status information; survey information; and other information important to the seismic data acquisition process. Source and receiver interface unit 502 can receive the hydrophone seismic data from receiver 140 though streamer communication conduit 548 (discussed above) that can be part of streamer 106, as well as streamer 106 position information from birds 130; the link is bi-directional so that commands can also be sent to birds 130 to maintain proper streamer positioning. Source and receiver interface unit 502 can also communicate bi-directionally with sources 104 through the streamer communication conduit 548 that can be part of streamer 106. Excitation signals, control signals, output signals and status information related to source 4 can be exchanged by streamer communication conduit 548 between system 500 and source 4.

Bus 504 allows a data pathway for items such as: the transfer and storage of data that originate from either the source sensors or streamer receivers; for processor 508 to access stored data contained in data storage unit memory 532; for processor 508 to send information for visual display to display 526; or for the user to send commands to system operating programs/software 536 that might reside in either the processor 508 or the source and receiver interface unit 502.

System 500 can be used to implement the methods described above associated with integrated multi-criteria shot indicator generation according to an exemplary embodiment. Hardware, firmware, software or a combination thereof may be used to perform the various steps and operations described herein. According to an exemplary embodiment, software 536 for carrying out the above discussed steps can be stored and distributed on multi-media storage devices such as devices 516, 518, 520, 524, 534, and/or 537 (described above) or other form of media capable of portably storing information (e.g., universal serial bus (USB) flash drive 526). These storage media may be inserted into, and read by, devices such as the CD-ROM drive 514, the disk drive 512, among other types of software storage devices.

It should be noted in the embodiments described herein that these techniques can be applied in either an "offline", e.g., at a land-based data processing center or an "online" manner, i.e., in near real time while onboard the seismic vessel. For example, integrated multi-criteria shot indicator generation associated with a given target can be performed at the end of each acquired line during a 4D survey. Integrated shot indicators according to these embodiments provide an easy way to assess simultaneously the repeatability and stability of many parameters (e.g., one scalar indicator is synthetized to assess several criteria). Such embodiments are applicable to any type of seismic acquisition system, e.g., systems using geophones, hydrophones, multi-component receivers, or any other type of receiver device or any combination of receiver devices, any type of source (e.g., multi-level sources), any type of streamer/cable, e.g., horizontal, slanted, curved profile, etc., undershoot or node acquisition.

The disclosed embodiments provide a server node, and a method for multi-criteria shot indicator generation associated with seismic data. It should be understood that this description is not intended to limit the invention. On the contrary, the embodiments are intended to cover alternatives, modifications and equivalents, which are included in the spirit and scope of the invention. Further, in the detailed description of the embodiments, numerous specific details are set forth in order to provide a comprehensive understanding of the invention. However, one skilled in the art would understand that various embodiments may be practiced without such specific details.

Although the features and elements of the present embodiments are described in the embodiments in particular combinations, each feature or element can be used alone without the other features and elements of the embodiments or in various combinations with or without other features and elements disclosed herein. The methods or flow charts provided in the present application may be implemented in a computer program, software, or firmware tangibly embodied in a computer-readable storage medium for execution by a general purpose computer or a processor.

This written description uses examples of the subject matter disclosed to enable any person skilled in the art to practice the same, including making and using any devices or systems and performing any incorporated methods. The patentable scope of the subject matter is defined by the claims, and may include other examples that occur to those skilled in the art. Such other examples are intended to be within the scope of the claims.

## Claims

1. A method for generating a multi-criteria shot indicator associated with repeatability of a seismic acquisition, said method comprising:

   generating (202) a plurality of shot indicators wherein said plurality of shot indicators are associated with determining a repeatability of one or more shots;
   generating (204) a plurality of weighting values associated, respectively, with said plurality of shot indicators;
   applying (206) said plurality of weighting values to said plurality of shot indicators and generating a plurality of weighted shot indicators; and
summing (208) said plurality of weighted shot indicators to generate said multi-criteria shot indicator.

2. The method of claim 1, wherein said plurality of shot indicators further comprises at least two of: a surface geometry indicator, a target illumination indicator, a travel time at target indicator, a source signature indicator and a noise indicator.

3. The method of claim 2, wherein said surface geometry indicator is based on a difference between a base shot and a monitor shot of a source position and a receiver position.

4. The method of claim 2, wherein said target illumination indicator is based on a difference between a base shot and a monitor shot of a 4D mismatch of a target illumination.

5. The method of claim 2, wherein said travel time at target indicator is based on a difference between a base shot and a monitor shot of a 4D mismatch of a base travel time and a monitor travel time for a hit on said target.

6. The method of claim 2, wherein said source signature indicator is based on a difference between a source signature and a reference signature.

7. The method of claim 6, wherein said reference signature is based on a 3D shot-to-shot stability analysis.

8. The method of claim 6, wherein said reference signature is based on a 4D evaluation associated with a base shot signature.

9. The method of claim 2, wherein said noise indicator is based on seismic noise recorded for an associated shot.

10. The method of claim 1, wherein each of said plurality of weighting values comprise one or more sensitivity factors.

11. A method for generating a multi-criteria shot indicator associated with repeatability or stability of seismic surveying, said method comprising:

generating (302) a plurality of shot indicators, wherein said plurality of shot indicators are associated, respectively, with determining repeatability or stability of one or more shots and comprise at least two of: a surface geometry indicator, a target illumination indicator, a travel time at target indicator, a source signature indicator and a noise indicator; and
combining (306) said plurality of shot indicators to generate said multi-criteria shot indicator.

12. The method of claim 11, further comprising:

generating (304) a plurality of weighting values associated, respectively, with said plurality of shot indicators;
applying (304) said plurality of weighting values to said plurality of shot indicators and generating a plurality of weighted shot indicators; and
summing (306) said plurality of weighted shot indicators to generate said multi-criteria shot indicator.

13. The method of claim 12, further comprising one or more sensitivity factors for each of said plurality of weighting values.

14. A system for generating a multi-criteria shot indicator based on seismic data, said system comprising:

one or more processors (508) configured to execute computer instructions and a memory configured to store said computer instructions wherein said computer instructions further comprise:

a shot indicator component (402) for generating a plurality of shot indicators, wherein said plurality of shot indicators comprise at least two of: a surface geometry indicator, a target illumination indicator, a travel time at target indicator, a source signature indicator and a noise indicator; and
a summing component (406) for summing said plurality of shot indicators to generate the multi-criteria shot indicator.

15. The system of claim 14, further comprising:

a weighting component for generating a plurality of weighting values
associated with said plurality of shot indicators and for applying said plurality of weighting values to respective ones of said plurality of shot indicators.

# FIG. 1

# Figure 2

$\overset{\displaystyle 200}{}$

**202**

Generating a plurality of shot indicators wherein said plurality of shot indicators are associated, respectively, with one or more shots and with determining repeatability of said one or more shots

**204**

Generating a plurality of weighting values associated, respectively, with said plurality of shot indicators

**206**

Applying said plurality of weighting values to said plurality of shot indicators and generating a plurality of weighted shot indicators

**208**

Summing said plurality of weighted shot indicators and generating said multi-criteria shot indicator

# Figure 3

~300

~302

Generating a plurality of shot indicator values

~304

Multiplying each of said plurality of shot indicator values by a weighting factor assigned to each of said plurality of shot indicator values to generate a plurality of weighted shot indicator values

~306

Summing each of said weighted shot indicator values to generate said multi-criteria shot indicator value

# Figure 4

400

402
Shot Indicator
Component

410
Seismic Data

404
Weighting
Component

406
Summing
Component

408
Output
Component

# FIG. 5

EP 2 784 549 A2

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- US 61805266 A
- US 4476553 A
- US 10259213 A